# EUROPEAN PATENT APPLICATION

(11) **EP 4 810 926 A1**
(43) Date of publication of application: **23.09.2026**
(21) Application number: 25164774.9
(22) Date of filing: 19.03.2025
(51) Int. Cl.: G01J 5/00, G01J 5/02, G01J 5/04, G01J 5/0821

(54) **FEEDING DEVICE, SYSTEM AND METHOD FOR MEASURING THE TEMPERATURE OF A MOLTEN METAL BATH WITH AN OPTICAL DEVICE**

(71) Applicant: Heraeus Electro-Nite International N.V., 3530 Houthalen (BE)
(72) Inventor: Van Vlierberghe, Michel, 3530 Houthalen (BE); Vranckx, Luc, 3530 Houthalen (BE)
(74) Representative: Heraeus IP

(57) **Abstract**

The present invention relates to a feeding device for an optical device for measuring the temperature of a molten metal bath. The device comprises detecting means, a housing, moving means enclosed by the housing and a guiding system connected to the housing by rotatable connection means. The guiding comprises at least an inlet portion, an outlet portion and a middle portion which is located between the inlet portion and the outlet portion. The middle portion of the guiding system is adjustable in length. The invention also relates to a system comprising the inventive feeding device and an optical device and a method using the system for measuring the temperature of a molten metal bath.

## Description

The present invention relates to a feeding device for an optical device for measuring the temperature of a molten metal bath. The invention also relates to a system comprising the inventive feeding device and an optical device and a method using the system for measuring the temperature of a molten metal bath.

The temperature of a molten metal bath in a metallurgical vessel is a critical parameter during the metal making process, which determines the quality of the resulting product. Typically, a temperature measurement of the molten metal is accomplished using well known immersion thermocouples such as described in US 2993944 A. Such thermocouples can be immersed manually by an operator with a steel pole with adapted electrical wiring and connections to convey the thermocouple signal to appropriate instrumentation. Additionally, many automatic thermocouple immersion mechanical systems are now utilized to provide thermocouple immersion. A further possible means for measuring the temperature of the molten metal bath, particularly of iron or steel in a melting environment of an electric arc furnace (EAF), involves immersing an optical fiber into the molten metal. The optical fiber may be provided as a virtually endless fiber which is wound on a coil and unwound for conducting a measurement. For measuring the temperature of the molten metal bath, such an optical fiber is fed into the metallurgical vessel, from where it can convey thermal radiation received from the molten metal to a detector, where the optical signal is converted to a temperature value. After a measurement, the optical fiber can be retracted.

Such a device is suitable for on-demand and semi-continuous temperature measurements in form of a series of immersion cycles. An operator can obtain a temperature measurement without any direct intervention with the harsh environment proximate to the metallurgical vessel.

The accuracy of the obtained results and a distortion-free operation of such measurements depend on several parameters. One critical parameter is the condition of the optical fiber at the point in time when the measurement is taken. In the demanding environment of the measurement situation in a metallurgical facility, the optical fiber is exposed to degrading circumstances. Therefore, such an optical fiber is typically surrounded by a protective cover, for example a metal tube. An optical fiber surrounded by a metal tube is often also referred to as optical cored wire or a fiber in metal tube (FIMT). Optical devices comprising such optical fibers and further protective means, such as an additional metal tube or an additional layer of protecting material, have been developed and are for example disclosed in US 2007268477 A1 and JP H10176954 A. Depending on the design of such an optical device, the protective means shield the optical fiber efficiently from thermal influences but can still be sensitive to other external physical factors.

Another critical part of a measurement process has been found to be the precise feeding of the optical device. Feeding includes the acceleration and deacceleration. Especially optical devices with relatively small cross-sections and thin metal tubes are sensitive to friction and impact effects leading to a damage of the optical fiber within the optical device. Furthermore, these kinds of optical devices need to be fed fast enough in order to reach an adequate immersion depth in the molten metal bath prior to their decomposition and damage due to the measuring environment in the high temperature molten metal. This requires high feeding speeds and high acceleration and deacceleration rates. Thus, these fragile optical devices provide additional challenges for the technical equipment of the immersion devices.

Known feeding devices are fixedly installed and comprise a rigid feeding system, with a geometry adapted for a particular metallurgical facility. An exemplary immersion device for the feeding of optical devices is described in EP 4141396 A1. An optical device, in particular a FIMT encased in an additional outer metal tube, is fed from a coil by means of a moving system through a guiding tube, the device is also suited to retract the optical device. The device is designed to be installed with a fixed geometry at an electric arc furnace. The problem to feed a fragile optical device is addressed, but the system allows no flexibility in terms of the relative positions between the place of installation and the point of measurement.

For foundry facilities, such systems are not yet available. These metallurgical production sites pose additional challenges to a measurement system compared to the circumstances of an electric arc furnace (EAF): the metal bath is in general smaller with a shallower depth of the metal melt, the position of the bath varies depending on the product to be cast and the environment within different facilities vary greatly. An on-demand measurement in the ladles may also be required. Currently the temperature is commonly measured manually by means of disposable or multi-use thermocouples. However, there is a need to measure more frequently, in an automated way without manual control and at a fixed measuring position in the bath (in all directions: x-y-z).

In view of the prior art, there is the need for a feeding device allowing the flexible feeding of an optical device in the environment of a steel foundry. There is also a need for a system utilizing such a system and a method of using it to determine the temperature of a molten metal bath as used in a foundry facility.

The objective of the invention is thus to provide a feeding device for an optical device for measuring a temperature of a molten metal bath which solves at least one of the problems discussed above.

In particular, one of the objects is to provide a feeding device which allows a flexible point of immersion for a fed optical device.

A further object is to provide a feeding device which allows the immersion of a fragile optical device with a minimal amount of friction and torsion on the device and its inner optical fiber with high accuracy and control. Furthermore, it is an objective to provide a feeding device which ensures the measurement with the optical device at a constant point of the surface of the molten metal bath in repeated immersion cycles. An additional aspect of the objective of the present invention is to provide a feeding device which minimizes the amount of unprotected optical device during the immersion and thus operates reliably independent of the circumstances accompanying the measurement. A further aspect addressed is to provide a feeding device which allows an operation with low maintenance.

A further object of the invention is to provide a system comprising the feeding device and an optical device to measure a temperature of a molten metal bath.

A further object of the invention is to provide a method utilizing the system to measure a temperature of a molten metal bath.

These objects are attained by the subject-matter defined in the independent claims.

The invention provides a feeding device for an optical device for measuring a temperature of a molten metal bath. The feeding device comprises
- detecting means, configured to receive a signal from the optical device;
- a housing;
- moving means, adapted to feed and retract the optical device, wherein the moving means are enclosed by the housing;
- a guiding system connected to the housing.

The guiding system extends from an inlet end to an outlet end and is connected to the housing by rotatable connection means at the inlet end, and comprises at least three portions:
- an inlet portion which comprises the inlet end;
- an outlet portion which comprises the outlet end;
- and a middle portion which is located between the inlet portion and the outlet portion.

The middle portion is adjustable in length.

In the environment of a metallurgical facility, especially in steel foundries, requirements for frequent reliable temperature measurements are very high. It has been found that a feeding device with the inventive configuration allows to utilize the feeding device in the demanding environment of steel foundries. In particular, the feeding device may be installed in a suitable remote location, while the metallurgical container comprising the metal melt to be measured may be positioned in broad variety of distances and heights. The feeding device allows for an axial and tangential flexibility and thus, an optical device fed by the feeding means may reach different positions with respect to the angle and distance to this position.

Additionally, the remote installation and automated operation enhances the safety of the foundry workers, since the maintenance and exchange of equipment, for example a coil on which the optical device is usually provided, can be carried out in safe distance to the molten metal bath.

The feeding device furthermore has a minimized footprint, rendering it especially suitable for foundry environments.

The feeding device according to the invention has been proven to be especially suitable for feeding and retracting an optical device with a thin outer metal sheath without exposing the optical device to tensional, frictional or bending forces.

A measurement usually comprises a sequence of steps, during which the optical device is first moved towards and into a metal melt, where the measurement is conducted, and subsequently away from the metal melt with several speeds and during several time periods. Especially the feeding, retracting and often recoiling of an optical device has been identified as factor which significantly influences the reliability of the obtainable data. The feeding device of the present invention allows the application of a wide range of sophisticated measurement schemes required for different circumstances occurring in a metallurgical facility with fast changes between feeding velocities and directions. During a measurement, a part of the optical device is consumed, requiring the exchange of the storing coil after a certain number of measurements.

Additionally, the inventive configuration of the components of the feeding device leads to an apparatus which is undemanding in terms of maintenance.

As used herein, the term "molten metal bath" is used to describe a melt in a furnace, in particular in a vessel. An alternative term for "molten metal bath" known to a skilled person is "metal melt". The molten metal of the molten metal bath is not particularly restricted. According to a preferred embodiment, the molten metal is molten steel. The term molten metal bath does not exclude the presence of any solid or gaseous parts, including for example non-molten parts of the respective metal.

The temperature of metal melts differs and usually depends on the composition of the metal and the stage of the melting process. According to a preferred embodiment, the temperature of the molten metal bath is in the range of 1200 - 1600 °C and more preferably in the range of 1300 - 1500 °C.

The molten metal bath of which the temperature shall be measured is located in a vessel, in particular a vessel in a steel foundry.

The invention provides a feeding device for an optical device. A feeding device is to be understood as an apparatus adapted to operate and control the movement of the optical device to conduct a temperature measurement in a molten metal bath.

Suitable optical devices are known to the skilled person. The optical device comprises at least an optical fiber. Preferably, the optical fiber is a flexible, transparent fiber, for example with a diameter of 50 µm or 62.5 µm. Optical fibers are most often used as means to transmit light, especially in the IR wavelength range, between the two ends of the fiber. Preferably, the optical fiber is formed from glass or plastic, more preferably from quartz glass. Preferably, the optical fiber is selected from the group consisting of graded index fibers and single-mode step index fibers. The optical fiber may comprise a coating layer, for example a coating layer of a rubber material.

The optical device preferably comprises an optical fiber laterally surrounded by at least one metal tube, also referred to as FiMT (Fiber in a Metal Tube). The optical fiber may also be surrounded by more than one metal tube, for example by an inner and an outer metal tube i.e. at least two metal tubes may surround the optical fiber laterally. Preferably, the optical fiber is centrally arranged in the metal tube or metal tubes. The optical fiber may be loosely arranged in the at least one metal tube, in other words, the inner diameter of the metal tube may be larger than the outer diameter of the optical fiber.

Preferably, the optical device comprises an optical fiber in a single metal tube. Such a single-tube FIMT has been shown to be advantageous for foundry applications due to its high flexibility.

Preferably, the metal of the at least one metal tube has a melting temperature which is higher than the temperature of the molten metal bath. In such a configuration, the metal tube does not melt but dissolves slowly during the measurement, which has surprisingly been found to improve the quality of the measurement results. The melting temperature of the at least one metal tube may for example be in the range of 1300 to 1600 °C, more preferably in the range of 1400 to 1500 °C.

Preferably, the metal of the at least one metal tube laterally surrounding the optical fiber is iron, steel or stainless steel, in particular stainless steel of grade 304 or 316.

Preferably, the at least one metal tube has an outer diameter in the range of from 2 mm to 8 mm, more preferred from 3 to 7 mm. The wall thickness of the at least one metal tube can be in the range of 0.1 mm to 0.6 mm, preferably in the range from 0.2 to 0.5 mm.

The total length of the optical device can be in the range of 300 m to 1000 m. Since the optical device is consumed during measurements, it shortens during operation of the feeding device, typically by a length of 30 to 70 cm per measurement sequence, depending on the temperature of the molten metal bath and the measurement protocol applied.

Accordingly, the optical device has an immersion end and an opposite end. The leading tip of the optical device is the tip of the immersion end of the optical device, i.e. the leading tip of the optical device is the end which is immersed into the molten metal bath in order to measure the temperature.

When the feeding device is operated, the optical device is consumed in the direction from the immersion end towards the opposite end and after each measuring sequence, another portion of the optical device will be the immersion end; i.e. the leading tip is newly generated after each measurement sequence. The term "consumption" as used herein refers to a disintegration of the optical device, such as for example the melting and dissolution of the optical device by and into the molten metal bath, a decomposition or burning of the whole optical device or its different components, and the like. The opposite end will be connected to the detecting means and will not be consumed during a measurement. In a typical measurement scenario, the radiation emitted by the molten metal bath, especially in the IR wavelength range, is conveyed by the optical fiber of the optical device to the detecting means. The intensity and/or spectral information of the radiation may be processed by a processing unit connected to the detecting means to obtain the temperature of the molten metal. The processing unit can be attached to a human-machine interface, for example a monitor and a keyboard.

The optical device is preferably provided on a storing unit, which is typically placed in, on or next to the feeding device. Preferably, the storing unit for the optical device is rotationally symmetric. For example, the storing unit for the optical device can be a coil, a reel, a spool, a drum or a cartridge.

The storing unit for the optical device typically comprises a cylindrical core. The cylindrical core can be characterized by its outer circumference and/or its diameter. The storing unit for the optical device can also comprise further components, as for example disc shaped or ringshaped side panels, installed on both sides of the cylindrical core. Such panels can have the same or a larger diameter than the cylindrical core, in the latter case building a rim which extends from the cylindrical core. In such cases, the outer diameter of the storing unit for the optical device is larger than the diameter of the cylindrical core of the storing unit for the optical device. The panels may or may not take the form of a grid.

The storing unit can be hollow, i.e. comprise an internal space. In other words, the storing unit can comprise a tube-shaped part.

In a preferred embodiment, one end of the optical device is connected to the storing unit for the optical device, in other words, the optical device has a fixed end connected to the storing unit and a free end. During operation of the feeding device, the free end will be the leading tip of the optical device.

It can be preferred, that the storing unit for the optical device is exchangeable. Thus, it can be replaced after the optical device was consumed during operation.

The feeding device is configured to move the optical device along an immersion path. The immersion path of the optical device is to be understood as the route which is passed by each increment of the optical device during feeding. It is to be understood, that the immersion path is predominantly determined by the components and means of the feeding device through which the optical device is guided and fed. The immersion path begins inside the housing and leads at least through the guiding system. Thus, a first section of the immersion path is located inside the housing and a second section of the immersion path is located outside the housing. In particular, the second section is located inside the guiding system. After leaving the guiding system, the immersion path can comprise at least one further section. During operation of the feeding device, this at least one further section can in particular be the section between the outlet end of the guiding system and the point where the leading tip of the optical device is immersed into the molten metal bath. Preferably, the first two sections of the immersion path are fully enclosed within the housing and the guiding system. In other words, the optical device is fully covered by components of the feeding device until it leaves the feeding device through the outlet end of the guiding system. Thus, a maximal protection and control of the optical device can be provided during operation.

Preferably, the immersion path does not comprise sections which are kinked. In other words, the immersion path is curved without the presence of kinks. Preferably, the immersion path does not comprise a curvature with a radius smaller than 200-times the outer diameter of the optical device. The radius of a curvature is defined by the radius of an imaginary circle which best approximates a curve at a point. Such a configuration allows an immersion of the optical device without excessive bending and the application of related forces which could lead to a plastic deformation and damages.

The feeding device comprises detecting means, configured to receive a signal from the optical device.

The detecting means are preferably configured to be coupled to the optical device. The detecting means are adapted to receive a light signal, in particular in the IR wavelength range, transmitted by the optical device. Preferably, the detecting means is a detector, in particular a pyrometer.

The detecting means can comprise electrical contacts. The electrical contacts are preferably configured to be connected to a storing unit for the optical device.

Preferably, the detecting means is connected to means for converting a received signal, in particular an analog-to-digital (AD) converter. The detecting means can further comprise power supply means.

Additional means can be arranged between the optical device and the detecting means when they are coupled, for example mode filters or fiber organizers.

The feeding device comprises moving means adapted to feed and retract an optical device. Moving means are to be understood as means configured to drive an active movement of the optical device. In order to move the optical device, a mechanical contact between the moving means and the optical device has to be established to some extent. In other words, the moving means comprise the components of the feeding device which move the optical device forwards and backwards. Within the present application, a "forward" movement is to be understood as a movement in a direction from the inlet end of the guiding system towards the outlet end towards the molten metal bath, while a "backward" movement is a movement away from the molten metal bath, i.e. a retraction of the optical device in a direction from the outlet end of the guiding system to the inlet end. Usually, the optical device is retracted in a direction away from a molten metal bath after a measurement sequence is finished.

Preferably, the moving means is configured to move the optical device with a minimal exposure of the optical device to frictional or twisting forces. During the movement, the leading tip of the optical device can be immersed below the surface of the molten metal bath, where temperature information can be obtained.

The moving means can be configured to adjust the feeding speed of the optical device. The feeding speed, i.e. the speed with which an increment of the optical device moves, can be in the range of 0.1 to 5.0 m/s.

The moving means can also be configured to adjust the acceleration of the optical device. The acceleration of the feeding speed can be up to 25 m/s². A fast acceleration allows a precise control of the feeding and retracting of the optical device.

The moving means may comprise at least one motor for driving of the optical device forwards and backwards. The motor for driving the moving means can change the movement speed of the optical device as required and is a part of the feeding speed adjustment mechanism of the feeding device. The at least one motor for driving the moving means may be a servo motor and/or comprise a servo drive so as to monitor the motor position.

The at least one motor for driving the moving means can be configured to detect a blockage on or of the immersion path.

The moving means may comprise feeding means. Feeding means may comprise suitable means through which the optical device may be guided, and which can engage which the optical device to enable a movement. Preferably, the feeding means are in contact with the optical device.

The feeding means are preferably configured to move the optical device in a straight manner, i.e, without a rotational, curved or bent movement. In other words, the immersion path of the optical device is preferably straight when passing the feeding means.

Preferably, the feeding means comprises at least one pair of facing wheels. Preferably, the at least one pair of facing wheels is driven by the at least one motor of the moving means, i.e. all wheels or at least one wheel are rotated by the motor. The wheels are preferably arranged to compressively fit the optical device. The optical device is such driven by the rotation of the wheels in response to the motor driving the moving means.

The wheels of the feeding means can have circumferential grooves, which are configured to accommodate the optical device. The most appropriate shape and geometry of the grooves of the wheels depends on the optical device applied for the temperature measurement. Preferably, the grooves of the wheels are u-shaped. The surface of the grooves of the wheels can have a flat or a corrugated surface. Such a configuration allows the feeding of the optical device without slipping.

In a preferred embodiment, the feeding means comprises more than one pair of wheels. The more than one pair of wheels of the feeding means can have the same or different configurations.

In a preferred embodiment, the at least one pair of wheels of the feeding means are spring loaded. In other words, at least one of the wheels is mounted in a fixed manner and the at least one other wheel is arranged opposite to the fixed wheel and is movable and held in position by an elastic spring. The spring-loaded configuration allows an optimal guiding of the optical device without the application of unnecessary pinch forces. Preferably, the pinching pressure applied by the spring-loaded wheels is adjustable.

When the optical device is provided on storing means, the moving means may be adapted to drive the storing unit of the optical device, preferably to rotate the storing means. In such cases, it may be preferred that the feeding device comprises a rotatable support for the storing unit of the optical device. It is to be understood, that the storing unit for the optical device may be mounted on the rotatable support. This configuration demands the rotatable support of the storing unit to be installed in a non-stationary configuration, i.e. it is installed in a way that it can be moved, especially rotated.

Preferably, a rotatable support for the storing unit for the optical device is configured to be moved by the moving means, preferably by a motor. Accordingly, the moving means is preferably configured to move the rotatable support for the storing unit of the optical device. It is to be understood, that in such a configuration the movement of the rotatable support of the storing unit, i.e. a rotation, leads to a rotation of the storing unit for the optical device. In other words, a driving of the rotatable support directly leads to a driving of the storing unit for the optical device. This configuration enables that the optical device is not only drawn from the storing unit but pushed forward.

A motor for driving a rotatable support for a storing unit for the optical device allows an efficient and controlled rotational movement of the storing unit. The motor for driving the rotatable support for the storing unit can change the rotational movement speed as appropriate and may function as a part of a feeding speed adjustment mechanism.

The motor for driving the rotatable support for the storing unit may be a servo motor and/or comprise a servo drive so as to monitor the motor position.

The rotatable support for the storing unit for the optical device can comprise electrical connecting means. Thus, the compact design of the measuring apparatus can be further enhanced.

A storing unit for the optical device can comprise means to interact with means comprised by the rotatable support for the storing unit, in other words, the storing unit for the optical device and the rotatable support for the storing unit for the optical device can comprise means which are compatible with each other. Such means can be configured to establish a mechanical or electrical interaction between the storing unit for the optical device and the rotatable support for the storing unit. Such compatible means allow a high control of the movement of the storing unit for the optical device caused by a movement of the rotatable support and additionally enhances the compact design of the feeding device.

The feeding device comprises a housing. The term "housing" is to be understood as an enclosure that shields its interior against an outer influence, respectively disruptions, which may in the present case be an interruption of the feeding and retracting of the optical device. Especially in metallurgical facilities, the surrounding can be a harsh environment, for example due to the process-inherent high temperatures and omnipresent dirt and scrap.

It is to be understood, that in operation the optical device is at least partly, preferably completely, provided in the housing. Thus, the housing comprises at least one opening, through which the optical device can be moved from inside the housing into the guiding system.

The housing encloses the moving means. In other words, no parts of the moving means are positioned outside the housing, in particular not in or on the guiding system. This configuration ensures, that all moving motions of the optical device, like pushing and pulling, are carried out within the housing. This ensures a disturbance free operation of the feeding device.

The housing may have doors for ease of maintenance or safety reasons. The housing can be thermally insulated. The housing walls can be double-layered. In a preferred embodiment, the void space between a double-layered housing wall is filled with a fire-resistant material.

The housing can be foreseen with acclimatization means, e.g. for cooling and heating. In a preferred embodiment, the housing is air-conditioned. In this way, the housing is protected against overheating. Overheating may disturb the process of feeding and retracting the optical device. Further, the air conditioning prevents condensation.

In a preferred embodiment, the housing comprises a gas connection port, i.e. the housing can be pressurized or purged. This embodiment allows to further protect the interior of the housing from environmental ingress, for example of dust and dirt particles.

The feeding device can further comprise control means, configured to control the activities of the moving means. In particular, the control means can be an electronic control device such as a microcontroller, a programmable logic controller (PLC) or a computer.

The feeding device may comprise straightening means. Straightening means are a component which can only straighten and/or rotate due to interactions, particularly frictional forces, with the optical device. Preferably, the straightening is conducted by a plastic deformation of the optical device. It is to be understood, that the immersion path of the optical device leads through such straightening means.

Preferably, the straightening means is non-motor driven. A non-motor-driven straightening means allows a feeding device with a minimal number of components interacting with the optical device that has to be coordinated or synchronized actively and allows a reliable operation of the feeding device.

Preferably, the straightening means can be configured to keep direct contact with the optical device from two opposed sides. In such a configuration, the straightening means can be understood as a half straightening means, since typically, a straightening means contacts an optical device from more than two opposite sides.

Preferably, the straightening means comprises at least two wheels, preferably more than two wheels. In a preferred embodiment, the at least two wheels are arranged along the immersion path of the optical device with a distance, i.e. their rotational axis are not on a common axis perpendicular to the immersion path. The pair or pairs of wheels of the straightening means can have the same or different configurations.

Preferably, the straightening means are positioned behind the moving means on the immersion path of the optical device, in particular behind the feeding means. In other words, an optical device is guided and/or moved through the straightening means after it was guided and/or moved through the feeding means along the immersion path. In this way, the optical device is actively moved only near to the position where it is provided to or in the feeding device.

Preferably, the straightening means are enclosed by the housing. Thus, a compact design of the feeding device is ensured.

Preferably, all components of the feeding device expect for the guiding system and the rotatable connection means are enclosed by the housing. Thus, the feeding device is configured as compact as possible.

The immersion device comprises a guiding system. A guiding system is to be understood as a system which passively guides the optical device without actively moving or influencing it. In other words, the guiding system does not comprise motors, feeding means or straightening means. The guiding system is configured to ensure that the optical device is protected from the environment as soon as it is moved out of the housing of the immersion device. The guiding system serves for guiding the optical device into the molten metal bath and/or out of the molten metal bath inside the vessel. It is to be understood, that the immersion path leads trough the guiding system and is therefore determined by its configuration and geometry. The guiding system comprises an inlet and an outlet to enables the feeding of the optical device through it.

The guiding system is connected to the housing. Such a configuration allows an immersion of the optical device without uncovered portions of at least the first two sections of the immersion path.

The guiding system extends from an inlet end, which is the end connected to the housing, to an outlet end. The outlet end of the guiding system can comprise an immersion end in feeding direction of the immersion path. The immersion end may be configured to be positioned inside a vessel containing the molten metal bath. It is therefore preferably configured to withstand the conditions inside of such a vessel. Configured to withstand such conditions means resistant to temperatures of for example molten steel.

The guiding system is connected to the housing by rotatable connection means. Rotatable connection means allow the rotation of the guiding system and with this its flexible axial positioning. The rotatable connection means is configured to rotate around an axis which is aligned with the inlet portion of the guiding system. In other words, the rotatable connection means allows the rotation of the guiding system around an axis which is essentially perpendicular to the top of the housing. It is to be understood, that the rotatable connection means is not in particular configured to allow a tilting of the guiding system relative to the housing.

The guiding system comprises at least three portions: an inlet portion which is the portion which comprises the inlet end of the guiding system, an outlet portion which comprises the outlet end of the guiding system, and a middle portion which is located between the inlet portion and the outlet portion. The guiding system may comprise further portions.

The middle portion of the guiding system is adjustable in length. In other words, the middle portion is configured to be expandable and contradictable. Such a middle portion allows the feeding device to be fixedly positioned while still providing the required flexibility to adjust the immersion of the optical device to changing environments and conditions within a metallurgical facility, in particular within a steel foundry. It is to be understood, that the length adjustability of the middle portion is an inherent property of the middle portion, in other words, no tools or additional parts are required to adjust the length of the middle portion.

The middle portion may for example comprise a telescopic unit.

Preferably, the inlet portion and the outlet portion of the guiding system are arranged with an angle of less than 45 °. Such a configuration allows a space efficient configuration of the feeding device. The angle between the inlet portion and the outlet portion is to be understood as the angle between tangents to the portions. An angle of 0 ° therefore indicates a parallel alignment of the portions. In such cases, the tangents will not intersect, since the inlet portion and the outlet portion will have a distance, bridged by at least the middle portion of the guiding system. Preferably, the inlet portion and the outlet portion of the guiding system are arranged with an angle between 0 to 45 °, more preferred between 0 to 30 °.

Preferably, the inlet portion of the guiding system is positioned at the top side or the bottom side of the housing. The top side of the housing is to be understood of the side which is opposite of the side which is configured to be placed on or next to or facing a floor of a metallurgical facility. The side of the housing which is configured to be placed on or next to or facing a floor of a metallurgical facility is also referred to as the bottom side of the housing.

Preferably, the inlet portion is arranged with an angle between 60 ° to 90 ° with respect to the topside or the bottom side of the housing. The angle between the inlet portion and the topside or the bottom side of the housing portion is to be understood as the angle between a tangent of the to the inlet portion and the respective side of the housing.

It can be advantageous, that the curvature of the guiding system is configured to guide the optical device without bending or kinking. In other words, the guiding system guides the immersion path of the optical device such that the optical device is guided with a minimum exposure to bending forces.

Preferably, the guiding system comprises at least one portion which is straight, i.e. not curved. Preferably, the outlet portion of the guiding system is straight.

Preferably, the guiding system has a circular cross-section in its longitudinal direction.

In a preferred embodiment, the guiding system comprises at least two individual components, which are separably connected to each other. Such a configuration allows a modular construction of the feeding device, enabling cleaning and troubleshooting.

Preferably, the guiding system comprises at least one guiding tube. If the guiding system comprises more than one guiding tube, it can be preferred that the more than one guiding tube can be interconnected in a detachable manner.

In a preferred embodiment, the at least one guiding tube is formed from metal.

Preferably, the minimal radius of the curvature of the immersion path is larger than 10-times the inner diameter of the at least one guiding tube, more preferred 30-times larger, most preferred 50-times larger. Such a ratio allows an immersion of the optical device without bending.

Preferably, the guiding system comprises an injection system. In such a configuration, the injection system comprises the last section of the immersion path of the optical device before it is immersed into the molten metal bath. The injection system is preferably composed of steel and/or a ceramic material.

Preferably, the injection system ends with a straight portion, i.e. the optical device is not bent prior to entering the molten metal bath. Thus, the optical device can be immersed along a straight immersion path into the molten metal bath and retracted back from the molten metal bath. The mechanical properties of the optical device change due to the heat to which the optical device is subjected during temperature measurement and/or the subsequent cooling. In particular, its flexibility increases. Guiding the optical device without bending on the last section of the immersion path avoids permanent deformation and, thus, wear, stress and friction of the optical device, ingress of material present inside the vessel and blocking of the injection system. Further unwanted movement of the optical device is also prevented.

In a preferred embodiment, the guiding system comprises at least one guiding tube and an injection system which are connected. Such a configuration ensures an immersion of the optical device with a minimal portion of unprotected sections on the immersion path. Preferably, the injection system is connected to the at least one guiding tube with a connector.

In a further embodiment, the feeding device comprises monitoring means to monitor the movement of the optical device, for example an encoder or inductive switches. Such monitoring means can be configured to monitor the movement of the optical device and thus allow a comparison of the intended movement with the actual movement of the optical device. Any displacement of the optical device, e.g. due to blocking, which cannot be detected otherwise, can thus still be measured.

Preferably, the monitoring means are positioned behind the moving means in the direction of the immersion path. This enables a particularly precise and disturbance-free monitoring of the movement of the optical device and high immersion control. The monitoring means may be configured to monitor the distance that the optical device is moved from a known starting point. The starting point can be defined by a position of the leading tip of the optical device detected by a means to identify the position of the leading tip of the optical device, in particular by a sensing means. Thus, after a position measurement, the monitoring device ensures that the position of the leading tip is known during subsequent movement of the optical device.

In embodiments in which the feeding device comprises control means, the control means can be configured to control the monitoring means. Preferably, the control means are configured to compare the position of the optical device as detected by the monitoring means with the position detected by a servo-motor of the moving means. Thus, a potential displacement of the optical device, a blockage of the guiding system or high wear or friction can be identified.

The feeding device can in particular be installed in a stationary manner. Preferably, the feeding device is configured such that it can be positioned next to or in a distance to a metallurgical vessel. In a foundry, the position of a relatively small tundish or ladle changes in dependence of the product to be cast, it may be positioned at the same level as the feeding device, it may also be positioned at a higher or lower level. The configuration of the inventive feeding device allows a stationary installation with an adaptive point of immersion for the optical device, dependent on the required circumstances within the facility.

A further aspect of the invention is a system for measuring the temperature of a molten metal bath, comprising an immersion device according to the invention and an optical device.

All features, advantages and embodiments mentioned in relation to the feeding device according to the invention also apply to the inventive system.

Preferably, the optical device is provided on a storing unit. The system may also comprise the storing unit. All features, advantages and embodiments of the optical device and the storing unit described in relation to the inventive feeding device also apply to the inventive system.

The system preferably comprises an analysis unit for data analysis.

The system may also include a control panel which allows user input or adjustments, for example in form of control features such as switches, keyboards or knobs. The control panel is preferably arranged on or at the housing or the feeding device.

The system can include displaying means, which can provide system feedback to a user. The displaying means is preferably arranged on or at the housing of the feeding device.

A further aspect of the invention is a method for measuring the temperature of a molten metal bath with the system according to the invention.

The method may comprise at least the steps of
(i) feeding the optical device into the molten metal bath;
(ii) measuring the temperature of the molten metal bath.

All features, advantages and embodiments mentioned in relation to the feeding device or the system according to the invention also apply to the inventive method.

The method comprises feeding of the optical device into the molten metal bath. It is to be understood, that the feeding step comprises the activity of the moving means.

The feeding may comprise the feeding of the optical device in a single step or in several steps according to a pre-defined feeding scheme.

The method comprises measuring the temperature of the molten metal bath. To measure the temperature, the radiation emitted by the molten metal bath, especially in the IR wavelength range, and conveyed a by the optical device to the detecting means is recorded. The intensity and/or spectral information of the radiation may be processed by a processing unit connected to the detecting means.

During the measurement step, the optical device can be at least partly consumed.

In preferred embodiments, the optical device comprises a metal tube with a melting point below the temperature of the molten metal bath. Surprisingly, it has been found that an such a configuration, the quality of the obtainable measurement data is enhanced.

The method may comprise retracting the optical device as a third step (iii). It is to be understood that retracting the device means, that a length of the of the optical device which was not consumed during the measurement step is moved away from the molten metal bath.

Preferably, the method according to the invention is performed more than once.

The idea underlying the invention shall subsequently be described in more detail with respect to exemplary embodiments shown in the figures. Features of the exemplary implementation can be combined individually or in a plurality with the claimed objects, unless otherwise indicated. The claimed scopes of protection are not limited to the exemplary implementation. Herein:
- Figure 1: shows a schematic top view on a feeding device in relation to possible positions of a molten metal bath.
- Figure 2: shows a schematic side view of a feeding device positioned in different distances to a molten metal bath.

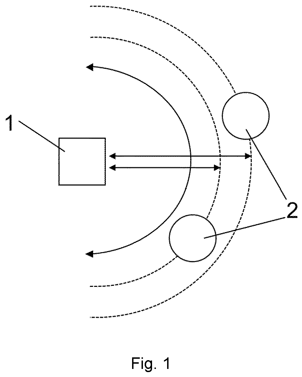

Figure 1 shows a schematic top view on a feeding device 1 in relation to possible positions of the container 2 of a molten metal bath, indicated by dashed lines. The arrows indicate the ranges of positions with respect to the relative angles and distances. Due to the configuration and the compact design of the feeding device 1, it may be permanently installed in a suitable position and adjusted to changing requirements in a metal producing facility.

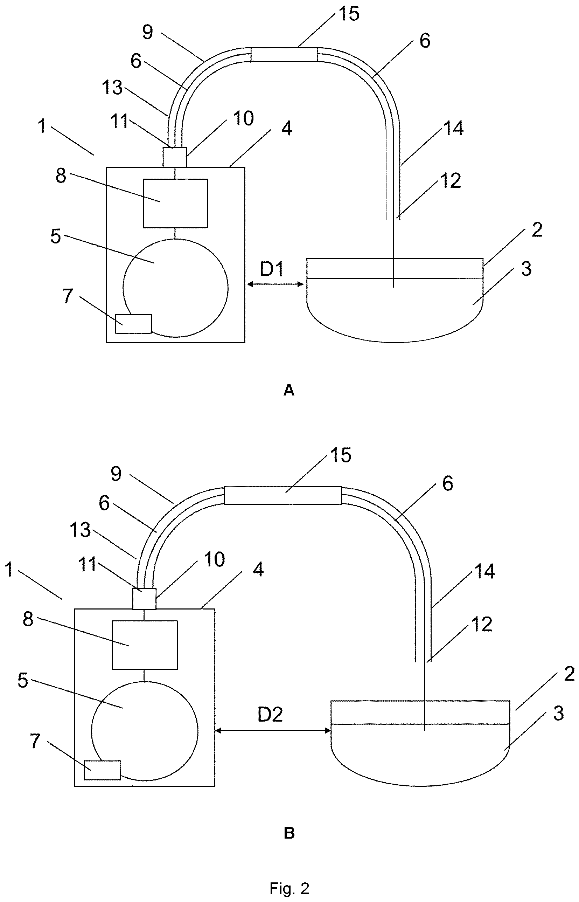

Figure 2 shows a schematic side view of a feeding device 1 in more detail, positioned in different distances to a container 2 comprising a molten metal bath 3. The housing 4 of the feeding device 1 encloses a rotatable coil 5, on which a FIMT 6 is provided. The housing 4 also encloses a detector 7, which is connected to the FIMT 6. The FIMT 6 extends from its storing place through a feeder 8, out of the housing 4 into a guiding tube 9. The guiding tube (which may also be referred to as guiding system, 9) is connected at its inlet end 11 to the housing 4 by a rotatable module 10, which can rotate around an axis which is aligned perpendicular to the top of the housing. The movement of the FIMT 6 is only driven by the feeding device 8, which builds the moving system of the device 1. During feeding, the FIMT 6 is moved through the inlet 11 of the guiding system 9 towards the outlet 12 before it enters the molten metal bath 3.

In Fig. 2 A, the molten metal bath 3 is positioned in a distance D1 with respect to the feeding device 1, whereas in Fig. 2 B the molten metal bath 3 is positioned in a larger distance D2. The inlet portion 13 and the outlet portion 14 of the guiding system 9 have a constant length and configuration, while the middle portion 15 is adjusted in length to bridge the varying distances. The extendable structure of the middle portion 15 may be formed by an extendable mechanism including several units coupled to each other between the inlet portion 13 and the outlet portion 14. The mechanism is made extendable by telescopically fitting a plurality of cylindrical members to each other.

In a preferred configuration of the feeding device, the moving means may comprise a module configured to rotate the coil on which the optical device is provided, facilitating the feeding and improving the control of the movement of the optical device.

### List of Reference Numerals

- 1: Feeding device
- 2: container
- 3: molten metal bath
- 4: housing
- 5: coil
- 6: Fiber in metal tube (FIMT)
- 7: detector
- 8: feeder / moving system
- 9: guiding system
- 10: rotatable module
- 11: inlet end of guiding system
- 12: outlet end of guiding system
- 13: inlet portion of guiding system
- 14: outlet portion of guiding system
- 15: middle portion of guiding system

## Claims

1. Feeding device for an optical device for measuring a temperature of a molten metal bath, comprising
- detecting means, configured to receive a signal from the optical device;
- a housing;
- moving means, adapted to feed and retract the optical device, wherein the moving means are enclosed by the housing;
- a guiding system connected to the housing, wherein the guiding system extends from an inlet end to an outlet end
and wherein the guiding system comprises at least three portions:
- an inlet portion which comprises the inlet end,
- an outlet portion which comprises the outlet end,
- and a middle portion which is located between the inlet portion and the outlet portion,
**characterized in that** the guiding system is connected to the housing by rotatable connection means at the inlet end, and that
the middle portion of the guiding system is adjustable in length.

2. Feeding device according to claim 1, wherein the middle portion of the guiding system comprises a telescopic unit.

3. Feeding device according to claim 1 or 2, wherein the inlet portion and the outlet portion of the guiding system are arranged with an angle of less than 45 °.

4. Feeding device according to any of the preceding claims, wherein the inlet portion is arranged with an angle between 60° to 90° with respect to the topside or the bottom side of the housing.

5. Feeding device according to any of the preceding claims, wherein the outlet portion of the guiding system is straight.

6. Feeding device according to any of the preceding claims, wherein the feeding device comprises straightening means.

7. Feeding device according to any of the preceding claims, wherein all components of the feeding device expect for the guiding system and the rotatable connection means are enclosed by the housing.

8. Feeding device according to any of the preceding claims, wherein the feeding device comprises a rotatable support for a storing unit of the optical device.

9. Feeding device according to claim 8, wherein the moving means is configured to move the rotatable support for the storing unit of the optical device.

10. Feeding device according to any of the preceding claims, wherein an optical device is fully covered by components of the feeding device until it leaves the feeding device through the outlet end of the guiding system.

11. System for measuring a temperature of a molten metal bath, comprising an immersion device according to any of claims 1 - 10 and an optical device.

12. System according to claim 11, wherein the optical device comprises an optical fiber laterally surrounded by at least one metal tube.

13. Method for measuring a temperature of a molten metal bath with a system according to claims 11 or 12.

14. Method according to claim 13, wherein the optical device comprises a metal tube with a melting point below the temperature of the molten metal bath.
